# FASCICULE DE BREVET EUROPEEN

(11) **EP 2 670 590 B1**
(45) Date de publication et mention de la délivrance du brevet: **17.12.2014**
(21) Numéro de dépôt: 12702027.9
(22) Date de dépôt: 31.01.2012
(51) Int. Cl.: B32B 5/18, B32B 5/26, B32B 5/28, B32B 37/14, B60R 13/00

(54) **PIECE STRUCTURELLE DE VEHICULE AUTOMOBILE ET PROCEDE DE FABRICATION ASSOCIE**
STRUKTURTEIL EINES KRAFTFAHRZEUGS UND VERFAHREN ZU SEINER HERSTELLUNG
STRUCTURAL PART OF A MOTOR VEHICULE AND METHOD FOR MAKING THE SAME

(30) Priorité: 04.02.2011 FR 1150910
(43) Date de publication de la demande: 11.12.2013
(73) Titulaire: Faurecia Automotive Industrie, 92000 Nanterre (FR)
(72) Inventeur: JEUNESSE, Steve, F-08210 Mouzon (FR); DECORME, Jacques, F-08090 Montcy Notre Dame (FR); DUVAL, Arnaud, F-08000 Charleville-Mezieres (FR)
(74) Mandataire: Domenego, Bertrand
(86) Numéro de dépôt international: PCT/EP2012/051599
(87) Numéro de publication internationale: WO 2012/104318

(56) Documents cités:
- EP-A1- 1 295 713
- DE-A1- 2 540 241
- US-A- 5 738 924
- US-B2- 6 761 953
- DATABASE EPODOC EUROPEAN PATENT OFFICE, THE HAGUE, NL; XP002658626, & JP 8 187810 A (ARACO CORP) 23 juillet 1996 (1996-07-23)

## Description

La présente invention concerne une pièce structurelle de véhicule automobile, du type comprenant :
- un premier mat de feutre et un deuxième mat de feutre, chaque mat de feutre comprenant des fibres et une résine liant les fibres ;
- un écarteur interposé entre le premier mat de feutre et le deuxième mat de feutre, le premier mat de feutre et le deuxième mat de feutre étant fixés sur des faces opposées de l'écarteur.

Une telle pièce est destinée à former notamment un plancher de véhicule automobile, tel qu'un plancher d'habitacle ou un plancher et un faux plancher de coffre, un panneau de portière, une tablette arrière, un arrière de siège de rang 2 et 3 ou encore une paroi délimitant un espace de rangement.

On connaît de US 6,761,953 des pièces de véhicule automobile du type précité réalisées à partir de voiles de fibres de verre assemblés sur un écarteur en nid d'abeille.

De telles pièces sont relativement rigides et présentent ainsi de bonnes propriétés mécaniques, notamment en flexion.

On connaît également de JP 8-187 810 une pièce d'équipement de véhicule automobile comportant deux couches formées à base de fibres de bois et de résine, et un écarteur en polystyrène disposé entre ces deux couches.

On connaît encore de EP 1 295 713 une pièce comportant un écarteur central en nid d'abeilles, noyé par de la mousse, et deux couches extérieures.

On connaît de US 5 738 924 un panneau structurant comportant un écarteur central noyé dans de la mousse, et deux couches fixées sur l'écarteur.

Toutefois, les pièces du type précité ne donnent pas entière satisfaction. En effet, la présence de résine polyuréthane augmente significativement le coût de la pièce. En outre, ces pièces ne sont pas formées à base de matériaux naturels.

Un but de l'invention est donc d'obtenir une pièce structurelle de véhicule automobile ayant de bonnes propriétés mécaniques tout en restant légère, la pièce étant peu coûteuse et respectueuse de l'environnement.

A cet effet, l'invention a pour objet une pièce structurelle de véhicule automobile telle que revendiquée dans la revendication 1.

La pièce selon l'invention peut comprendre l'une ou plusieurs des caractéristiques telles que revendiquées dans les revendications 2 à 16, prise(s) isolément ou suivant toute(s) combinaison(s) techniquement possible(s).

L'invention a également pour objet un procédé de fabrication d'une pièce structurelle de véhicule automobile tel que revendiqué dans la revendication 17.

Le procédé selon l'invention peut comprendre la caractéristique telle que revendiquée dans les revendications 18.

L'invention sera mieux comprise à la lecture de la description qui va suivre, donnée uniquement à titre d'exemple, et faite en se référant aux dessins annexés, sur lesquels :
- la figure 1 est une vue prise en coupe d'une première pièce structurelle d'équipement selon l'invention ;
- la figure 2 est une vue partielle en coupe d'une variante de pièce selon l'invention ;
- la figure 3 est une vue partielle en coupe d'une autre variante de pièce selon l'invention ;
- les figures 4 à 7 représentent les différentes étapes de fabrication d'une pièce selon un premier procédé selon l'invention.

Dans tout ce qui suit, les termes «intérieur» et «extérieur» s'entendent généralement par rapport à la pièce représentée sur les figures.

Par ailleurs, les pourcentages sont des pourcentages massiques, sauf si le contraire est précisé.

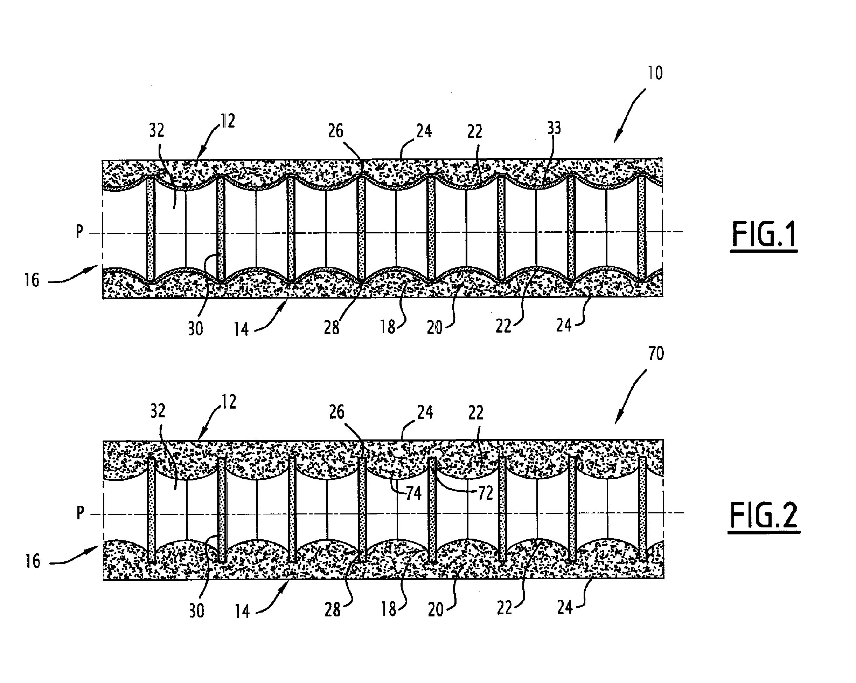

Une première pièce d'équipement 10 de véhicule automobile selon l'invention est représentée sur la figure 1. Cette pièce est destinée à former notamment un plancher de véhicule automobile, tel qu'un plancher d'habitacle ou un plancher et un faux plancher de coffre, un panneau de portière, une tablette arrière, un arrière de siège de rang 2 et 3 ou une paroi délimitant un espace de rangement.

Comme illustré par la figure 1, la pièce 10 comporte un premier mat de feutre 12, un deuxième mat de feutre 14 et un écarteur 16 disposé entre les mats 12, 14, chacun des mats 12, 14 étant fixé sur l'écarteur 16.

Chaque mat 12, 14 comporte des fibres 18 et une résine 20 liant les fibres 18 entre elles.

Selon l'invention, chaque mat 12, 14 comprend au moins 50 % de fibres de bois, en particulier de fibres de bois courtes, par rapport à la masse totale du mat 12, 14.

Par «fibres de bois», on entend des fibres de cellulose obtenues notamment par découpe d'arbres comprenant un tronc comme par exemple des pins.

Comme il est bien connu, le bois est un matériau organique composé notamment de fibres de cellulose enrobées dans une matrice de lignine. Le bois se trouve dans le tronc des arbres.

Les fibres de bois sont avantageusement obtenues à partir des chutes résultant de la séparation entre le coeur de l'arbre d'une part, et le reste du tronc et de l'écorce, d'autre part. Les fibres de bois sont obtenues par délignage des chutes.

Les fibres de bois ainsi obtenues sont assemblées entre elles pour former une nappe,.

Comme on a vu plus haut, la proportion massique de fibres de bois dans chaque mat 12, 14 est supérieure à 50 %, et est notamment comprise entre 60 % et 90 %, par exemple entre 60 % et 75 %, ou encore entre 80 % et 90 %, par rapport à la masse totale du mat 12, 14.

La longueur des fibres de bois est strictement inférieure à 20 mm, notamment inférieure à 10 mm. Cette longueur est avantageusement comprise entre 5 mm et 15 mm, en particulier entre 7 mm et 12 mm.

Dans un premier mode de réalisation, au moins un parmi le premier mat 12 et le deuxième mat 14 comporte en outre des fibres synthétiques, par exemple des fibres de polyester, des fibres bicomposantes à base de polyester etc..

La quantité de fibres synthétiques est alors non nulle, et est notamment comprise entre 0 % et 45 % en masse, par exemple entre 10 % et 30 % en masse.

Dans une variante, les fibres synthétiques comportent un mélange de fibres polyester monocomposant et de fibres bicomposantes à base de polyester. Les fibres bicomposantes à base de polyester comportent deux types de polyester ayant des points de fusion différents, alors que les fibres polyester monocomposant sont constituées d'un seul type de polyester ayant un point de fusion unique.

La proportion massique de fibres polyester monocomposant dans le mélange de fibres synthétiques est supérieure à 50 % en masse, et est notamment comprise entre 60 % et 90 % en masse, par exemple égale à 70 % ou à 80 % en masse, par rapport à la masse totale du mélange de fibres synthétiques.

Les fibres synthétiques améliorent notamment la formabilité de la pièce 10. Ceci permet de réaliser par exemple des pièces non planes présentant des reliefs, comme des planchers de coffre automobile, des planchers d'habitacle, des panneaux de portières, des tablettes ou des dos de sièges rang 2 ou 3.

La résine 20 assemble les fibres 18 entre elles. Elle imprègne la nappe de fibres 18 pour lier mécaniquement les fibres 18 entre elles.

Le pourcentage massique de résine 20 contenu dans chaque mat 12, 14 est inférieur à 25% et est avantageusement compris entre 5 % et 25 %. Il est en particulier compris entre 8 % et 20 % en masse.

La résine 20 utilisée est avantageusement une résine thermodurcissable qui durcit de manière irréversible, notamment par réticulation chimique, sous l'effet de la chaleur ou d'une radiation. De telles résines se présentent généralement sous forme de poudre ou de granulats avant d'être réticulées, et présentent une forme solide une fois réticulée.

Des exemples de résine thermodurcissable sont par exemple la résine acrylique, la résine métacrylique, la résine phénolique, la résine polyuréthanne, ou la résine époxy.

Les mats 12, 14 de feutre ainsi obtenus sont comprimés dans un moule chaud pour présenter une densité comprise entre 0,8 et 1,2, avantageusement entre 0,9 et 1,1.

Les mats 12, 14 de feutre sont rigides. Leur résistance à la flexion est fonction de la densification des mats de feutre, de la masse surfacique des mats de feutre et du poids de résine.

La masse surfacique moyenne de chaque mat 12 et 14 est par exemple comprise entre 50 g/m² et 2000 g/m², avantageusement entre 600 g/m² et 1600 g/m².

L'épaisseur moyenne de chaque mat 12, 14 est inférieure à l'épaisseur de l'écarteur 16, prise perpendiculairement à une surface directrice de la pièce 10, entre une surface intérieure 22 et une surface extérieure 24 du mat 12, 14.

L'épaisseur moyenne de chaque mat 12, 14 avant compression, est par exemple comprise entre 5 mm et 20 mm, avantageusement entre 5 mm et 7 mm

L'épaisseur moyenne de chaque mat 12, 14 après compression dépend de la masse surfacique du feutre et de la densité visée entre 0,8 et 1,2

L'écarteur 16 est interposé entre les mats 12, 14. Sa densité est comprise entre 10 g/dm³ et 500 g /dm³ et plus particulièrement entre 20 g/dm³ et 50 g/dm³

Avantageusement, l'écarteur 16 est réalisé à base d'une structure alvéolaire ou en nid d'abeille.

Ainsi, l'écarteur 16 présente une pluralité de parois 30 sensiblement perpendiculaires à un plan moyen de la pièce 10, les parois 30 délimitant des espaces centraux 32 de contour fermé formant les alvéoles. Ainsi, chaque espace central ou alvéole 32 débouche en regard de la face intérieure 26 respective d'un mat 12, 14.

Dans un mode de réalisation, les alvéoles 32 définissent des mailles polygonales, notamment hexagonales.

La dimension transversale maximale des mailles hexagonales, prise parallèlement à un plan moyen P de la pièce, est supérieure à 5 mm, et est par exemple comprise entre 5 mm et 20 mm, notamment entre 8 et 10mm.

En variante, les mailles sont ondulées. Dans ce cas, l'amplitude des ondulations est comprise entre 5 et 15mm et le pas (distance entre deux crêtes d'ondulation) est compris entre 5 et 20mm, avantageusement 8 mm et 16 mm

L'écarteur 16 est avantageusement réalisé en un matériau léger, tel que du papier ou du carton.

La masse surfacique de l'écarteur 16 est faible. Cette masse est notamment inférieure à 2000 g/m², et est avantageusement comprise entre 50 g/m² et 1200 g/m².

De préférence, cette masse surfacique est inférieure à 1000 g/m² et est sensiblement comprise entre 400 g/m² et 800 g/m².

La masse surfacique de l'écarteur 16 est ainsi inférieure à la masse surfacique de chaque mat 12, 14, avantageusement elle est 1,5 à 2,5 fois inférieure à la masse surfacique de chaque mat 12, 14.

Ainsi, la pièce 10 présente une légèreté adéquate, du fait de la faible densité de l'écarteur 16.

L'écarteur 16 présente avantageusement une épaisseur supérieure à 2 mm, et par exemple comprise entre 2 mm et 100 mm, notamment entre 5 mm et 20 mm, avantageusement sensiblement égale à 15 mm, prise entre ses faces opposées 26, 28.

La tranche des parois 30 délimite les faces opposées 26, 28 de l'écarteur 16 sur lesquelles sont assemblés respectivement le premier mat 12 et le deuxième mat 14.

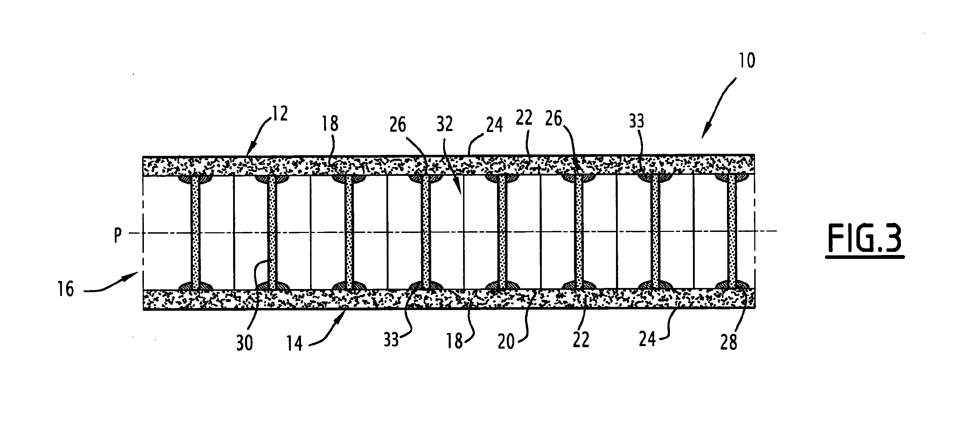

Dans la pièce 10 représentée sur la figure 1 et sur la figure 3, un liant 33 est utilisé pour fixer le premier mat 12 sur la première face 26 et le deuxième mat 14 sur la deuxième face 28. Ce liant est par exemple une colle, un film ou un autre matériau adhésif compatible avec la composition des mats 12, 14 et de l'écarteur 16.

Dans l'exemple particulier de la figure 1, le liant 33 est un film couvrant sensiblement la surface intérieure 22 du mat 12, 14.

Ce liant peut faire partie des familles époxy, acrylique, méthacrylate, polyuréthane ou acétate de polyvinyle.

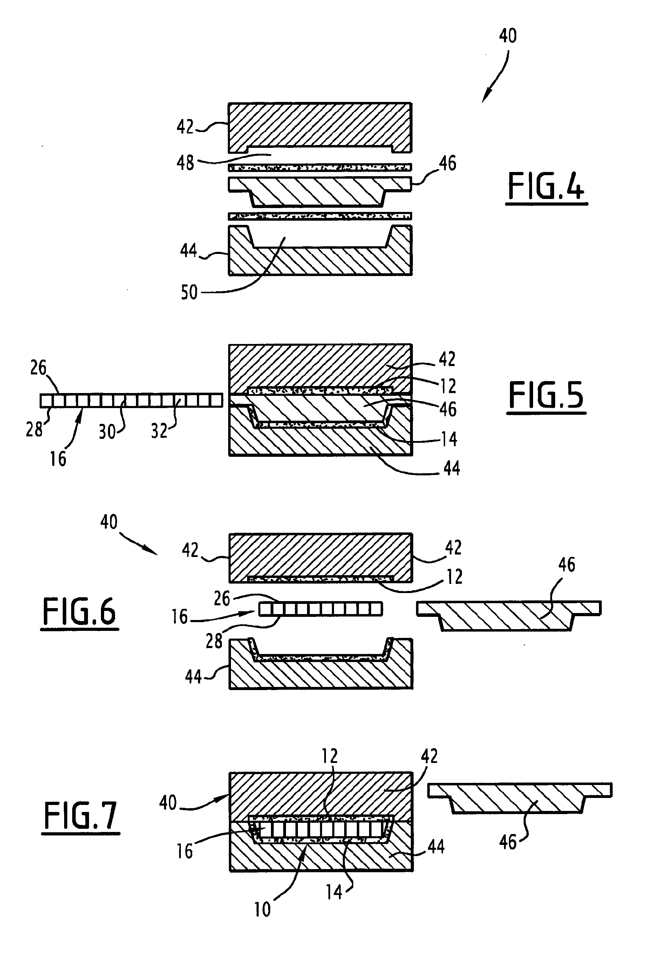

Un premier procédé de fabrication selon l'invention, pour la réalisation de la pièce 10, est illustré par les figures 4 à 7.

Ce procédé est mis en oeuvre dans un moule 40 comportant un premier demi-moule 42 creux, un deuxième demi-moule 44 creux et un noyau 46 inséré de manière amovible entre le premier demi-moule creux 42 et le deuxième demi-moule creux 44.

Le premier demi-moule 42 est mobile par rapport au deuxième demi-moule 44 entre une position d'ouverture du moule, représentée sur la figure 4 ou sur la figure 6, une position intermédiaire de fermeture en présence du noyau 46, représentée sur la figure 5, et une position de fermeture totale du moule 40, représentée sur la figure 7, en l'absence du noyau 46.

Le premier procédé de fabrication de la pièce 10 comporte initialement une étape d'introduction des nappes de fibres destinées à former les mats 12 et 14 dans les espaces intermédiaires 48, 50 définis respectivement entre le premier demi-moule 42 et le noyau 46 et entre le deuxième demi-moule 44 et le noyau 46. Les nappes de fibres sont imprégnées de résine 20 sous forme solide.

De préférence, les nappes de fibres sont introduites dans le moule 40 sans chauffage préalable, à la température qui règne à l'extérieur du moule 40 ou au moins à une température inférieure à celle nécessaire pour faire fondre la résine 20.

Le premier demi-moule 42, le deuxième demi-moule 44 et le noyau 46 sont chauffés à une température supérieure à celle nécessaire au durcissement de la résine.

La température des demi-moules et du noyau est par exemple supérieure à 200 °C, et est notamment comprise entre 210°C et 250°C, avantageusement entre 230 °C et 240°C.

Puis, le moule 40 est placé dans sa position intermédiaire, comme représenté sur la figure 5. Les nappes de fibres sont comprimées et découpées simultanément par des moyens de découpe (non représentés) pour présenter une densité comprise entre 0,8 et 1,2, par exemple entre 0,9 et 1,1. La résine 20 est alors thermodurcie et les mats de feutre 12, 14 sont formés aux dimensions de la pièce 10.

Puis, comme représenté sur la figure 6, le moule 40 est passé dans sa position ouverte. Le noyau 46 est ensuite extrait hors de l'espace situé entre les demi-moules 42, 44. L'écarteur 16, préalablement muni du liant 33 destiné à fixer les mats 12, 14 sur ses faces opposées 26, 28, est introduit entre les deux demi-moules 42, 44.

Le moule 40 est alors passé dans sa position totalement fermée représentée sur la figure 7. Les demi-moules 42 et 44 sont chauffés. Lors de la fermeture du moule, chaque mat 12, 14 est appliqué fermement sur une face 26, 28 de l'écarteur 16. Le liant 33 est alors activé thermiquement et/ou par pression pour fixer définitivement chaque mat 12, 14 sur l'écarteur 16.

Simultanément, l'écarteur 16 est découpé suivant le pourtour de la pièce 10 par des moyens de découpe (non représentés).

Le premier procédé selon l'invention est donc particulièrement simple à mettre en oeuvre, et peu coûteux puisqu'il nécessite un seul moule 40, la pièce 10 étant totalement formée dans ce moule 40.

Dans ce procédé, la présence du noyau 46 permet d'assurer une compression efficace de chacun des mats 12, 14 et une insertion minimale des mats dans les espaces centraux, comme illustré par la figure 3.

Dans une variante de procédé, les deux mats de feutre 12, 14 sont formés séparément et sont comprimés comme décrit précédemment. L'écarteur 16 est alors introduit avec le liant 33 et les mats de feutre 12, 14 comprimés, chauds ou réchauffés, dans un moule. Le moule est ensuite fermé pour assembler les mats 12, 14 sur l'écarteur 16.

Dans une autre variante de procédé, l'écarteur 16 dont les faces opposées 26, 28 sont munies de liant est introduit entre les nappes de feutre non comprimées dans un moule. Puis, le moule est fermé et est chauffé pour provoquer la réticulation de la résine, la compression des nappes de fibres, et la fixation des mats 12, 14 ainsi formés sur l'écarteur 16.

Dans une variante de pièce 10, les fibres 18 constituant au moins un du premier mat de feutre 12 et du deuxième mat de feutre 14 sont exclusivement des fibres de bois.

Dans ce cas, le pourcentage massique de fibres de bois est supérieur à 75 %, avantageusement supérieur à 80 %, le reste du mat 12, 14 étant formé de résine 20 liant les fibres 18. Par exemple, le mat de feutre 12, 14 comporte environ 85% de fibres de bois et environ 15% de résine acrylique ou phénolique.

Dans une autre variante de pièce 10, au moins un parmi le premier mat 12 et le deuxième mat 14 comprend des fibres naturelles, en plus des fibres de bois. Ces fibres naturelles se substituent par exemple partiellement ou totalement aux fibres synthétiques décrites plus haut. La proportion massique de fibres naturelles est alors supérieure à 10 %, et notamment comprise entre 10 % et 50 %, en particulier entre 15 % et 25 %.

Les fibres naturelles sont alors réalisées à partir d'un végétal qui peut être du lin, du chanvre, du kenaf, du bambou ou du sisal.

La longueur des fibres naturelles est supérieure en moyenne à celle des fibres de bois. En moyenne, la longueur des fibres naturelles est ainsi supérieure à 20 mm, et notamment comprise entre 20 mm et 150 mm, par exemple entre 30 mm et 100 mm, en particulier entre 60 mm et 90 mm.

Par exemple, le mat de feutre 12, 14 comporte environ 65% de fibres de bois, environ 20% de fibres naturelles et environ 15% de résine acrylique ou phénolique.

Dans une autre variante de pièce 10, au moins un parmi le premier mat 12 et le deuxième mat 14 comprend des fibres de verre, en plus des fibres de bois. Ces fibres de verre se substituent par exemple partiellement ou totalement aux fibres synthétiques décrites plus haut.

Une deuxième pièce 70 selon l'invention est représentée sur la figure 2. A la différence de la première pièce 10, au moins un parmi le premier mat 12 et le deuxième mat 14 est fixé sur l'écarteur 16 sans liant, par engagement mécanique sur l'écarteur 16.

A cet effet, au moins une région 72 de la paroi 30 de l'écarteur 16 est introduite dans le mat 12, 14 et est maintenue par la résine 20 constituant le mat 12, 14 et/ou par engagement mécanique dans les fibres. Ainsi, du fait de l'engagement mécanique de la région 72 dans le mat 12, 14 et de la présence de résine 20, le mat 12, 14 est fixé sur l'écarteur 16, sans qu'il soit nécessaire d'ajouter un liant.

Au moins une région 74 du mat 12, 14 située entre deux parois 30 en regard fait alors saillie dans l'espace central 32 entre les parois 30.

La pièce 10 représentée sur la figure 3 diffère de la pièce 10 représentée sur la figure 1 en ce que le liant 33 est formé par des cordons de matériau adhésif décrit plus haut, délimitant des espaces dépourvus de liant sur la surface intérieure 22.

Avantageusement, le liant 33 est déposé sur la tranche des parois 30 de l'écarteur et/ou au voisinage de la tranche.

Les pièces 10, 70 de véhicule automobile obtenues par l'utilisation de fibres de bois peu coûteuses, associées à un procédé de fabrication particulièrement efficace présentent donc un coût réduit. Cette optimisation de coût se fait sans perte des propriétés mécaniques, en conservant la possibilité de former des pièces de structures complexes, éventuellement non planes.

Les pièces 10, 70 ainsi formées présentent en outre une composition respectueuse de l'environnement, en particulier parce qu'elles utilisent des matériaux naturels et que la quantité de résine nécessaire à la tenue mécanique de la pièce 10, 70 est faible.

Enfin les pièces 10, 70 de véhicule automobile sont thermodures, elles présentent donc une bonne tenue mécanique quelque soit la température ambiante, même sous des températures élevées, par exemple supérieure à 100°C et notamment autour de 110°C.

Par « thermodure », on entend que la pièce est irréversiblement durcie, de sorte qu'une augmentation de la température de la pièce ne provoque pas de fluage, de ramollissement, voire de fusion de la pièce, contrairement à une pièce thermoplastique. Une pièce « thermodure » selon l'invention est par ailleurs infusible après réticulation de la résine 20.

Dans encore une autre variante, l'écarteur 16 est formé par une mousse, telle qu'une mousse PU (polyuréthane) ou PP (polypropylène) ou PES (polyester) ou encore une mousse à base de déchets de mousse, ou par un matériau tel que du polystyrène expansé ou du liège ou du balsa, offrant une masse surfacique inférieure à celle du premier mat 12 et du deuxième mat 14.

Il résulte directement et sans ambigüité de ce qui précède que la densité de chaque mat 12, 14 de feutre obtenu après compression est comprise entre 0,8 et 1,2, avantageusement entre 0,9 et 1,2, et notamment entre 0,9 et 1,1.

Ces densités sont particulièrement élevées comparées à celles d'un matériau en bois classique, tel que les panneaux HDF (High Density Fiberboards).

Pour former des mats 12, 14 avec une telle densité, il est avantageux d'utiliser des mats de superficie inférieure à 10 m², notamment comprise entre 1 m² et 5 m².

Il est alors possible de travailler avec des presses de forte puissance pour réaliser la compression des mats de feutre 12, 14. Ces presses présentent par exemple une pression minimale supérieure à 200 tonnes, notamment comprise entre 200 tonnes et 250 tonnes. Ceci permet d'accommoder des matériaux qui sont formés à base de résine thermodurcissable telle que celles décrites plus haut.

Dans la mise en oeuvre du procédé selon l'invention, telle qu'elle est décrite sur les Figures 4 à 7, l'écarteur 16 conserve toute son intégrité. En effet, la pression élevée qui est utilisée pour réaliser les mats 12, 14 comprimés avec les densités précitées est appliquée en s'appuyant sur un noyau 46 qui est distinct de l'écarteur 16.

La pression appliquée peut donc être très élevée, dans les gammes décrites plus haut, sans risque de détérioration de l'écarteur 16. Il est possible d'utiliser ensuite un écarteur 16 de faible densité, présentant des propriétés mécaniques en compression plus limitées, tel qu'un écarteur en carton, en mousse, en nid d'abeilles, en billes de polystyrène.

En outre, le procédé selon l'invention permet de réaliser des pièces tridimensionnelles, qui conduisent parfois à étirer fortement les mats 14, 16 lors du formage.

La présence de fibres longues, notamment de longueur supérieure à 20 mm, notamment comprise entre 20 mm et 150 mm, avantageusement entre 30 mm et 100 mm, et encore plus avantageusement entre 60 mm et 80 mm, évite au mat 12, 14 de se déchirer lors du formage.

Ces fibres longues constituent des adjuvants de fabrication, car elles ne contribuent pas nécessairement au renfort mécanique des mats 12, 14.

Plus généralement, le pourcentage massique de résine 20 contenu dans chaque mat 12, 14 peut être supérieur à 25 %. Ce pourcentage est généralement inférieur à 40 % en masse, et peut être compris entre 26 % en masse et 40 % en masse.

Comme précisé plus haut, le procédé selon l'invention est particulièrement adapté pour réaliser des pièces non planes présentant des reliefs.

## Revendications

1. Pièce structurelle (10 ; 70) de véhicule automobile, du type comprenant :
- un premier mat (12) de feutre et un deuxième mat (14) de feutre, chaque mat (12, 14) de feutre comprenant des fibres (18) et une résine (20) liant les fibres (18) ;
- un écarteur (16) interposé entre le premier mat (12) de feutre et le deuxième mat (14) de feutre, le premier mat (12) de feutre et le deuxième mat (14) de feutre étant fixés sur des faces opposées (16, 18) de l'écarteur (16) ;
**caractérisée en ce qu'**au moins un parmi le premier mat (14) et le deuxième mat (16) comporte au moins 50 % en masse de fibres de bois liées entre elles par la résine (20), et **en ce que** chaque mat (12, 14) de feutre présente une densité comprise entre 0,8 et 1,2, avantageusement entre 0,9 et 1,1.

2. Pièce (10 ; 70) selon la revendication 1, **caractérisée en ce que** la longueur des fibres de bois est inférieure à 20 mm, et est avantageusement comprise entre 5 mm et 15 mm, notamment entre 7 mm et 12 mm.

3. Pièce (10; 70) selon l'une quelconque des revendications précédentes, **caractérisée en ce qu'**au moins un parmi le premier mat (12) de feutre et le deuxième mat (14) de feutre comporte une quantité non nulle et inférieure à 45 % en masse de fibres synthétiques, avantageusement de fibres de polyester et/ou de fibres polyester bicomposantes.

4. Pièce (10 ; 70) selon la revendication 3, **caractérisée en ce qu'**au moins un parmi le premier mat (12) de feutre et le deuxième mat (14) de feutre comporte, en masse, entre 60% et 80% de fibres de bois, entre 10% et 30% de fibres synthétiques, et entre 5% et 25% de résine.

5. Pièce (10 ; 70) selon l'une quelconque des revendications précédentes, **caractérisée en ce qu'**au moins un parmi le premier mat (12) de feutre et le deuxième mat (14) de feutre comprend une quantité non nulle de fibres naturelles distinctes des fibres de bois, la quantité massique de fibres naturelles étant inférieure à 45 %

6. Pièce (10 ; 70) selon l'une quelconque des revendications précédentes, **caractérisée en ce qu'**au moins un parmi le premier mat (12) de feutre et le deuxième mat (14) de feutre comprend une quantité non nulle de fibres longues de longueur supérieure à 20 mm, et notamment comprise entre 20 mm et 150 mm, avantageusement entre 30 mm et 100 mm, avantageusement entre 60 mm et 80 mm, les fibres longues étant avantageusement des fibres naturelles distinctes des fibres de bois.

7. Pièce (10 ; 70) selon l'une quelconque des revendications 1 à 2, **caractérisée en ce que** toutes les fibres d'au moins un parmi le premier mat (12) de feutre et le deuxième mat (14) de feutre sont des fibres de bois.

8. Pièce (10 ; 70) selon l'une quelconque des revendications précédentes, **caractérisée en ce que** la résine (20) est une résine thermodurcissable telle qu'une résine acrylique, une résine phénolique, une résine polyuréthanne, une résine époxy ou une résine métacrylique.

9. Pièce (10 ; 70) selon la revendication 8, **caractérisée en ce que** le pourcentage massique de résine (20) dans chacun parmi le premier mat (12) de feutre et le deuxième mat (14) de feutre est inférieur à 40 %, notamment inférieur à 25 %, et avantageusement compris entre 8 % et 20 %.

10. Pièce (10) selon l'une quelconque des revendications précédentes, **caractérisée en ce qu'**au moins un parmi le premier mat (12) de feutre et le deuxième mat (14) de feutre est fixé sur l'écarteur (16) par un liant (33).

11. Pièce (10; 70) selon l'une quelconque des revendications précédentes, **caractérisée en ce que** l'épaisseur de l'écarteur (16) est comprise entre 2 mm et 100 mm, et est notamment comprise entre 5 mm et 20 mm.

12. Pièce (10; 70) selon l'une quelconque des revendications précédentes, **caractérisée en ce que** la masse surfacique de l'écarteur (16) est inférieure à la masse surfacique de chacun du premier mat (12) de feutre et du deuxième mat (14) de feutre, et est avantageusement comprise entre 50 g/m² et 1000 g/m², notamment entre 400 g/m² et 800 g/m².

13. Pièce (10 ; 70) selon l'une quelconque des revendications précédentes, **caractérisée en ce que** l'écarteur (16) est formé d'un corps alvéolaire, avantageusement d'un corps en nid d'abeille.

14. Pièce (10 ; 70) selon la revendication 13, **caractérisée en ce que** l'écarteur (16) est en papier ou en carton.

15. Pièce (10, 70) selon l'une quelconque des revendications précédentes, **caractérisée en ce qu'**elle est thermodure.

16. Pièce (10, 70) selon l'une quelconque des revendications précédentes, **caractérisée en ce qu'**elle constitue un plancher de véhicule automobile, tel qu'un plancher d'habitacle ou un plancher et un faux plancher de coffre, une tablette arrière, un panneau de portière, un arrière de siège de rang 2 et 3 ou une paroi délimitant un espace de rangement.

17. Procédé de fabrication d'une pièce structurelle (10; 70) de véhicule automobile, du type comprenant les étapes suivantes :
- formage en moule chaud, d'un premier mat (12) de feutre et d'un deuxième mat (14) de feutre, simultanément ou séparément, chaque mat (12, 14) de feutre comprenant des fibres (18) et une résine (20) liant les fibres (18), au moins un du premier mat (12) de feutre et du deuxième mat (14) de feutre comportant au moins 50 % en masse de fibres de bois liées entre elles par la résine, chaque mat (12, 14) de feutre présentant une densité comprise entre 0,8 et 1,2, avantageusement entre 0,9 et 1,1 ;
- disposition d'un écarteur (16) entre le premier mat de feutre (12) et le deuxième mat de feutre (16) ;
- fixation du premier mat (12) de feutre et du deuxième mat (14) de feutre sur des faces opposées (26, 28) de l'écarteur (16).

18. Procédé selon la revendication 17, **caractérisé en ce que** l'étape de formage et l'étape de fixation sont réalisées dans le même moule chaud (40), le procédé comprenant avantageusement la disposition d'un noyau central (46) dans le moule (40) entre les mats de feutre (12, 14) lors de l'étape de formage de chaque mat de feutre (12, 14), et le retrait du noyau central (46) hors du moule (40) pour permettre l'insertion de l'écarteur (16) entre le premier mat (12) de feutre et le deuxième mat (14) de feutre lors de l'étape de fixation.

## Patentansprüche

1. Strukturteil (10; 70) eines Kraftfahrzeugs, der Art, die umfasst:
- eine erste Filzmatte (12) und eine zweite Filzmatte (14), wobei jede Filzmatte (12, 14) Fasern (18) und ein die Fasern (18) bindendes Harz (20) umfasst;
- einen Abstandshalter (16), der zwischen der ersten Filzmatte (12) und der zweiten Filzmatte (14) angeordnet ist, wobei die erste Filzmatte (12) und die zweite Filzmatte (14) an entgegengesetzten Seiten (16, 18) des Abstandshalters (16) befestigt sind;
**dadurch gekennzeichnet, dass** mindestens eine der ersten Matte (14) und der zweiten Matte (16) mindestens 50 Massen-% an Holzfasern aufweist, die unter sich durch das Harz (20) gebunden sind, und dass jede Filzmatte (12, 14) eine Dichte aufweist, die zwischen 0,8 und 1,2, vorzugsweise zwischen 0,9 und 1,1 liegt.

2. Teil (10; 70) nach Anspruch 1, **dadurch gekennzeichnet, dass** die Länge der Holzfasern kleiner als 20 mm ist und vorzugsweise zwischen 5 mm und 15 mm, insbesondere zwischen 7 mm und 12 mm liegt.

3. Teil (10; 70) nach einem beliebigen der vorhergehenden Ansprüche, **dadurch gekennzeichnet, dass** mindestens eine der ersten und zweiten Filzmatte (12, 14) eine Menge, die nicht Null und kleiner als 45 Massen-% beträgt, an synthetischen Fasern, vorzugsweise Polyesterfasern und/oder Bikomponentenpolyesterfasern aufweist.

4. Teil (10; 70) nach Anspruch 3, **dadurch gekennzeichnet, dass** mindestens eine der ersten und zweiten Filzmatte (12, 14) zwischen 60 und 80 Massen-% an Holzfasern, zwischen 10 und 30 Massen-% an synthetischen Fasern und zwischen 5 und 25 Massen-% an Harz aufweist.

5. Teil (10; 70) nach einem beliebigen der vorhergehenden Ansprüche, **dadurch gekennzeichnet, dass** mindestens eine der ersten und der zweiten Filzmatte (12, 14) eine Menge, die nicht Null ist, an Naturfasern, die sich von den Holzfasern unterscheiden, umfasst, wobei die Massenmenge an Naturfasern kleiner als 45% ist.

6. Teil (10; 70) nach einem beliebigen der vorhergehenden Ansprüche, **dadurch gekennzeichnet, dass** mindestens eine der ersten und der zweiten Filzmatte (12, 14) eine Menge, die nicht Null ist, an langen Fasern mit einer Länge größer als 20 mm und insbesondere zwischen 20 mm und 150 mm, vorzugsweise zwischen 30 und 100 mm, vorzugsweise zwischen 60 und 80 mm umfasst, wobei die langen Fasern vorteilhafterweise Naturfasern sind, die sich von den Holzfasern unterscheiden.

7. Teil (10; 70) nach einem beliebigen der Ansprüche 1 bis 2, **dadurch gekennzeichnet, dass** alle Fasern mindestens einer der ersten und der zweiten Filzmatte (12, 14) Holzfasern sind.

8. Teil (10; 70) nach einem beliebigen der vorhergehenden Ansprüche, **dadurch gekennzeichnet, dass** das Harz (20) ein wärmehärtendes Harz ist, wie ein Acrylharz, ein Phenolharz, ein Polyurethanharz, ein Epoxidharz oder ein Metacrylharz.

9. Teil (10; 70) nach Anspruch 8, **dadurch gekennzeichnet, dass** die Massenprozentanteile an Harz (20) in jeder der ersten und der zweiten Filzmatte (12, 14) kleiner als 40%, insbesondere kleiner als 25% sind und vorteilhafterweise zwischen 8% und 20% liegen.

10. Teil (10; 70) nach einem beliebigen der vorhergehenden Ansprüche, **dadurch gekennzeichnet, dass** mindestens eine der ersten und der zweiten Filzmatte (12, 14) mit dem Abstandshalter (16) durch ein Bindemittel (33) verbunden ist.

11. Teil (10; 70) nach einem beliebigen der vorhergehenden Ansprüche, **dadurch gekennzeichnet, dass** die Dicke des Abstandshalters (16) zwischen 2 mm und 100 mm, und insbesondere zwischen 5 mm und 20 mm liegt.

12. Teil (10; 70) nach einem beliebigen der vorhergehenden Ansprüche, **dadurch gekennzeichnet, dass** die flächenbezogene Masse des Abstandshalters (16) kleiner ist als die flächenbezogene Masse jeder der ersten und der zweiten Filzmatte (12, 14) und vorzugsweise zwischen 50 g/m² und 1000 g/m², insbesondere zwischen 400 g/m² und 800 g/m² liegt.

13. Teil (10; 70) nach einem beliebigen der vorhergehenden Ansprüche, **dadurch gekennzeichnet, dass** der Abstandshalter (16) aus einem alveolaren Körper, vorzugsweise aus einem wabenförmigen Körper gebildet ist.

14. Teil (10; 70) nach Anspruch 13, **dadurch gekennzeichnet, dass** der Abstandshalter (16) aus Papier oder Pappe besteht.

15. Teil (10, 70) nach einem beliebigen der vorhergehenden Ansprüche, **dadurch gekennzeichnet, dass** es duroplastisch ist.

16. Teil (10, 70) nach einem beliebigen der vorhergehenden Ansprüche, **dadurch gekennzeichnet, dass** es einen Boden eines Kraftfahrzeugs, wie einen Boden einer Fahrgastinnenzelle oder einen Boden eines falschen Bodens des Kofferraums, eine hintere Abdeckplatte, eine Türfüllung, ein Sitzrückteil der Reihe (2) und (3) oder eine Wand, die einen Stauraum begrenzt, bildet.

17. Verfahren zur Herstellung eines Strukturteils (10; 70) eines Kraftfahrzeugs, der Art, das die folgenden Schritte umfasst:
- Bilden einer ersten Filzmatte (12) und einer zweiten Filzmatte (14) gleichzeitig oder getrennt in einer warmen Form, wobei jede Filzmatte (12, 14) Fasern (18) und ein die Fasern (18) bindendes Harz (20) aufweist, und mindestens eine der ersten und der zweiten Filzmatte (12, 14) mindestens 50 Massen-% an Holzfasern, die untereinander durch das Harz gebunden sind, aufweist, und jede Filzmatte (12, 14) eine Dichte zwischen 0,8 und 1,2, vorteilhafterweise zwischen 0,9 und 1,1 aufweist;
- Anordnen eines Abstandshalters (16) zwischen der ersten Filzmatte (12) und der zweiten Filzmatte (16);
- Befestigen der ersten Filzmatte (12) und der zweiten Filzmatte (14) an entgegengesetzten Seiten (26, 28) des Abstandshalters (16).

18. Verfahren nach Anspruch 17, **dadurch gekennzeichnet, dass** der Schritt des Bildens und der Schritt des Befestigens in derselben warmen Form (40) realisiert sind, wobei das Verfahren vorteilhafterweise die Anordnung eines Mittelkerns (46) in der Form (40) zwischen den Filzmatten (12, 14) bei dem Schritt des Bildens jeder Filzmatte (12, 14) umfasst und das Herausziehen des Mittelkerns (46) aus der Form (40), um das Einführen des Abstandshalters (16) zwischen die erste Filzmatte (12) und die zweite Filzmatte (14) bei dem Schritt des Befestigens zu erlauben.

## Claims

1. Motor vehicle structural component (10; 70), of the type comprising:
- a first mat of felt (12) and a second mat of felt (14), each felt mat (12, 14) comprising fibers (18) and a resin (20) binding the fibers (18);
- a spacer (16) interposed between the first felt mat (12) and the second felt mat (14), the first felt mat (12) and the second felt mat (14) being fixed to opposite faces (16, 18) of the spacer (16);
**characterized in that** at least one of the first mat (14) and the second mat (16) comprises at least 50 in weight of wood fibers bound together by the resin (20), and **in that** each felt mat (12, 14) has a density comprised between 0.8 and 1.2, advantageously between 0.9 and 1.1.

2. Component (10; 70) according to claim 1, **characterized in that** the length of the wood fibers is smaller than 20 mm, and is advantageously comprised between 5 mm and 15 mm, in particular between 7 mm and 12 mm.

3. Component (10; 70) according to any one of the previous claims, **characterized in that** at least one of the first felt mat (12) and the second felt mat (14) includes a non-zero quantity and less than 45 in weight of synthetic fibers, advantageously of polyester fibers and/or of bicomponent polyester fibers.

4. Component (10; 70) according to claim 3, **characterized in that** at least one of the first felt mat (12) and the second felt mat (14) includes in weight, between 60% and 80% of wood fibers, between 10% and 30% of synthetic fibers, and between 5% and 25% of resin.

5. Component (10; 70) according to any one of the previous claims, **characterized in that** at least one of the first felt mat (12) and the second felt mat (14) comprises a non-zero quantity of natural fibers distinct from wood fibers, the quantity in weight of natural fiber being less than 45%.

6. Component (10; 70) according to any one of the previous claims, **characterized in that** at least one of the first felt mat (12) and the second felt mat (14) comprises a non-zero quantity of long fibers with a length being greater than 20 mm, and in particular comprised between 20 mm and 150 mm, advantageously between 30 mm and 100 mm, advantageously between 60 mm and 80 mm, the long fibers advantageously being natural fibers distinct from wood fibers.

7. Component (10; 70) according to any one of claims 1 to 2, **characterized in that** all of the fibers of at least one of the first felt mat (12) and the second felt mat (14) are wood fibers.

8. Component (10; 70) according to any one of the previous claims, **characterized in that** the resin (20) is a thermosetting resin such as an acrylic resin, a phenolic resin, a polyurethane resin, an epoxy resin or a methacrylate resin.

9. Component (10; 70) according to claim 8, **characterized in that** the weight percentage of resin (20) in each of the first felt mat (12) and the second felt mat (14) is less than 40%, in particular less than 25% and advantageously comprised between 8% and 20%.

10. Component (10) according to any one of the previous claims, **characterized in that** at least one of the first felt mat (12) and the second felt mat (14) is fastened on the spacer (16) by a binder (33).

11. Component (10; 70) according to any one of the previous claims, **characterized in that** the thickness of the spacer (16) is comprised between 2 mm and 100 mm, and is, in particular, comprised between 5 mm and 20 mm.

12. Component (10; 70) according to any one of the previous claims, **characterized in that** the surface weight of the spacer (16) is lower than the surface weight of each of the first felt mat (12) and the second felt mat (14), and is advantageously comprised between 50 g/m² and 1,000 g/m², in particular between 400 g/m² and 800 g/m².

13. Component (10; 70) according to any one of the previous claims, **characterized in that** the spacer (16) is made up of a cellular body, advantageously a honeycomb body.

14. Component (10; 70) according to claim 13, **characterized in that** the spacer (16) is made from paper or cardboard.

15. Component (10; 70) according to any one of the previous claims, **characterized in that** it is thermoset.

16. Component (10; 70) according to any one of the previous claims, **characterized in that** it forms a motor vehicle floor, such as a passenger compartment floor or a floor and false bottom of the trunk, a rear tray table, a door panel, a seatback in rows 2 and 3, or a wall delimiting a storage area.

17. Method for manufacturing a motor vehicle structural component (10; 70), of the type comprising the following steps:
- forming with a hot mould a first felt mat (12) and a second felt mat (14), simultaneously or separately, each felt mat (12, 14) comprising fibers (18) and a resin (20) binding the fibers (18), at least one of the first felt mat (12) and the second felt mat (14) including at least 50% of wood fibers in weight bound together by the resin, each felt mat (12, 14) having a density comprised between 0.8 and 1.2, advantageously 0.9 and 1.1;
- positioning a spacer (16) between the first felt mat (12) and the second felt mat (16);
- fastening the first felt mat (12) and the second felt mat (14) on opposite faces (26, 28) of the spacer (16).

18. Method according to claim 17, **characterized in that** the forming step and the fastening step are carried out in the same hot mould (40), the method advantageously comprising positioning a central core (46) in the mould (40) between the felt mats (12, 14) during the forming step of each felt mat (12, 14), and removing the central core (46) from the mould (40) to allow the insertion of the spacer (16) between the first felt mat (12) and the second felt mat (14) during the fastening step.
